# EUROPEAN PATENT APPLICATION

(11) **EP 3 998 483 A1**
(43) Date of publication of application: **18.05.2022**
(21) Application number: 20836385.3
(22) Date of filing: 23.06.2020
(51) Int. Cl.: G01N 37/00, G01N 35/08, G01N 1/00

(54) **LIQUID SUPPLY METHOD AND INSPECTION CHIP**

(30) Priority: 08.07.2019 JP 2019126774; 08.11.2019 JP 2019202842
(71) Applicant: SEKISUI CHEMICAL CO., LTD., Osaka-shi Osaka 530-8565 (JP)
(72) Inventor: KOUNO, Takamasa, Mishima-gun, Osaka 618-0021 (JP); INUI, Nobuhiko, Hasuda-shi, Saitama 349-0198 (JP); NAKAMURA, Tsutomu, Mishima-gun, Osaka 618-0021 (JP); KOBARU, Shoutarou, Mishima-gun, Osaka 618-0021 (JP); IMAMURA, Kazuhiko, Mishima-gun, Osaka 618-0021 (JP); TAKAHASHI, Ryousuke, Mishima-gun, Osaka 618-0021 (JP); SASAKI, Tomoya, Hasuda-shi, Saitama 349-0198 (JP)
(74) Representative: Ter Meer Steinmeister & Partner
(86) International application number: PCT/JP2020/024539
(87) International publication number: WO 2021/006028

(57) **Abstract**

Provided is a liquid supply method capable of accurately mixing a plurality of liquids without providing a complicated liquid supply control mechanism. A liquid supply method using an inspection chip 1, the liquid supply method including: a step of supplying a first liquid from an upstream flow path 4A to a combined flow path 7 and making the first liquid wet and spread on a wall surface of the combined flow path 7 to hold the first liquid in the combined flow path 7; a step of supplying a second liquid from the upstream flow path 4A to the combined flow path 7 and combining the first liquid and the second liquid; and a step of supplying the combined first liquid and the second liquid to a mixing flow path 8, and mixing the first liquid and the second liquid.

## Description

### TECHNICAL FIELD

The present invention relates to a liquid supply method and an inspection chip using a chip provided with flow paths through which a liquid is supplied.

### BACKGROUND ART

Conventionally, inspections including blood tests and genetic tests, and biochemical analyses have been attempted by controlling liquid supply and reaction of each specimen or sample using a chip provided with flow paths through which liquid is delivered. In such a chip for inspection or analysis, a flow path structure that enables a plurality of liquids to be combined and mixed may be provided.

For example, Patent Document 1 below discloses a chip having a mixing mechanism that combines three or more flow paths through which each liquid flows to mix the all liquid. In the chip of Patent Document 1, some of three or more flow paths through which each liquid flows are combined to form one combined path, the combined path is branched into two or more branch paths on a downstream end thereof, and a flow path of another portion of the three or more flow paths is combined with at least one of the two or more branch paths.

### Related Art Document

### Patent Document

Patent Document 1: JP 2005-10031 A

### SUMMARY OF THE INVENTION

### PROBLEMS TO BE SOLVED BY THE INVENTION

However, when such flow path is used as in Patent Document 1, there is a problem that it is difficult to control a timing of liquid supply for each liquid in order to combine and uniformly mix a plurality of liquids. In addition, variation in size between chips, or the like, possibly causes a timing of combining liquids to be deviated, and in this case, some liquids may pass through without being mixed, or a mixed state may become uneven. Therefore, measurement results may vary.

In addition, in order to accurately control the timing of liquid supply in each liquid, a large-scale device having a complicated liquid supply control mechanism is required, and there is a problem that miniaturization is difficult. In addition, there is a problem that a manufacturing cost increases.

An object of the present invention is to provide a liquid supply method and an inspection chip capable of accurately mixing a plurality of liquids without providing a complicated liquid supply control mechanism.

### MEANS FOR SOLVING THE PROBLEMS

A liquid supply method according to the present invention is a liquid supply method using an inspection chip, the inspection chip including: a combined flow path that combines a first liquid and a second liquid; and a mixing flow path that mixes the combined first liquid and the second liquid on a downstream side of the combined flow path, the liquid supply method including: a step of supplying the first liquid to the combined flow path and making the first liquid wet and spread on a wall surface of the combined flow path to hold the first liquid in the combined flow path; a step of supplying the second liquid to the combined flow path and combining the first liquid and the second liquid; and a step of supplying the combined first liquid and the second liquid to the mixing flow path, and mixing the first liquid and the second liquid.

In a specific aspect of the liquid supply method according to the present invention, after a specimen is collected using the second liquid, the first liquid and the second liquid are combined.

In another specific aspect of the liquid supply method according to the present invention, the specimen is a body fluid, a virus, a bacterium, a cell, or an extract thereof.

In another specific aspect of the liquid supply method according to the present invention, a volume of the first liquid is smaller than a volume of the second liquid.

In still another specific aspect of the liquid supply method according to the present invention, the first liquid has higher wetness than the second liquid.

In still another specific aspect of the liquid supply method according to the present invention, a height difference is repeatedly provided at a bottom of the combined flow path in a liquid supply direction of the combined flow path.

In still another specific aspect of the liquid supply method according to the present invention, a wall surface of the combined flow path is surface-treated.

In still another specific aspect of the liquid supply method according to the present invention, a wall surface of the combined flow path is a rough surface.

In still another specific aspect of the liquid supply method according to the present invention, the first liquid and the second liquid are supplied by pressure of gas generated by applying light or heat to a gas generating member.

In a broad aspect of the inspection chip according to the present invention, the inspection chip includes: an upstream flow path in which a first liquid and a second liquid are independently held; a combined flow path that combines the first liquid and the second liquid on a downstream side of the upstream flow path; and a mixing flow path that mixes the combined first liquid and second liquid on a downstream side of the combined flow path, in which a height difference is repeatedly provided at a bottom portion of the combined flow path in a liquid supply direction of the combined flow path.

In another broad aspect of the inspection chip according to the present invention, the inspection chip includes: an upstream flow path in which a first liquid and a second liquid are independently held; a combined flow path that combines the first liquid and the second liquid on a downstream side of the upstream flow path; and a mixing flow path that mixes the combined first liquid and second liquid on a downstream side of the combined flow path, in which a wall surface of the combined flow path is surface-treated.

In another broad aspect of the inspection chip according to the present invention, the inspection chip includes: an upstream flow path in which a first liquid and a second liquid are independently held; a combined flow path that combines the first liquid and the second liquid on a downstream side of the upstream flow path; and a mixing flow path that mixes the combined first liquid and second liquid on a downstream side of the combined flow path, in which a wall surface of the combined flow path is a rough surface.

In a specific aspect of the inspection chip according to the present invention, the upstream flow path further includes a specimen holder for holding a specimen on a downstream side of the second liquid.

### EFFECT OF THE INVENTION

According to the present invention, it is possible to provide a liquid supply method and an inspection chip capable of accurately mixing a plurality of liquids without providing a complicated liquid supply control mechanism.

### BRIEF DESCRIPTION OF DRAWINGS

[Fig. 1] Fig. 1 is a perspective view illustrating an appearance of a chip used in a liquid supply method according to a first embodiment of the present invention.
[Fig. 2] Fig. 2 is a schematic plan view for explaining a flow path structure of a chip used in the liquid supply method according to the first embodiment of the present invention.
[Fig. 3] Fig. 3 is an enlarged schematic cross-sectional view illustrating a combined flow path in a chip used in the liquid supply method according to the first embodiment of the present invention.
[Fig. 4] Fig. 4 is an enlarged schematic cross-sectional view illustrating a combined flow path of a modification of the chip used in the liquid supply method according to the first embodiment of the present invention.
[Fig. 5] Fig. 5 is a schematic plan view for explaining a flow path structure of a chip used in a liquid supply method according to a second embodiment of the present invention.
[Fig. 6] Fig. 6 is an enlarged schematic plan view illustrating a combined flow path of the chip used in the liquid supply method according to the second embodiment of the present invention.
[Fig. 7] Fig. 7 is an enlarged view of a combined flow path according to a modification.
[Fig. 8] Fig. 8 is an enlarged schematic plan view illustrating a mixed liquid collecting unit used in Examples 5 and 6 and Comparative Example 2.
[Fig. 9] Fig. 9 is a schematic plan view for explaining a flow path structure of a chip used in a comparative example.

### MODES FOR CARRYING OUT THE INVENTION

Hereinafter, the present invention will be clarified by describing specific embodiments of the present invention with reference to the drawings.

### (First embodiment)

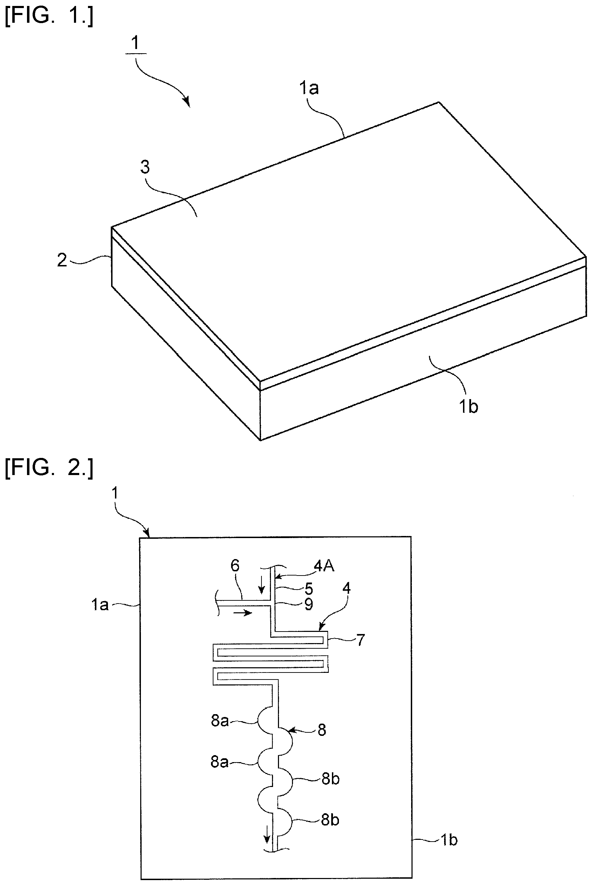

Fig. 1 is a perspective view illustrating an appearance of a chip used in a liquid supply method according to a first embodiment of the present invention. Fig. 2 is a schematic plan view for explaining a flow path structure of a chip used in the liquid supply method according to the first embodiment of the present invention.

The chip 1 used in the liquid supply method according to the first embodiment of the present invention is an inspection chip. The chip 1 can be widely used for inspection, analysis, and the like. In the present embodiment, the chip 1 has a rectangular plate-like shape. However, the shape of the chip 1 is not particularly limited.

In the present embodiment, a substrate 2 and a cover member 3 provided on the substrate 2 are included. The substrate 2 is made of a synthetic resin injection molding. The cover member 3 is made of elastomer or synthetic resin. However, the substrate 2 and the cover member 3 may be made of other materials. The chip 1 may be formed by laminating a plurality of synthetic resin sheets, and is not particularly limited.

A flow path through which a liquid is supplied is provided inside the chip 1. Here, the flow path is a microchannel. The flow path may be a flow path having a cross-sectional area larger than that of the microchannel, instead of the microchannel. However, the microchannel is preferable. Thereby, various inspections and analyses can be performed with a small amount of sample.

Meanwhile, the microchannel refers to a fine flow path that causes a micro effect when the liquid is conveyed. In such a microchannel, the liquid is strongly affected by surface tension, and exhibits behavior different from that of a liquid flowing through a flow path having a normal large size.

The cross-sectional shape and size of the microchannel are not particularly limited as long as the microchannel is a channel in which the above-described micro effect occurs. For example, from a viewpoint of reducing a flow path resistance when a pump or gravity is used to flow a liquid into the microchannel, when a cross-sectional shape of the microchannel is generally rectangular (including a square), a size of a shorter side is preferably 20 µm or more, more preferably 50 µm or more, and still more preferably 100 µm or more. From a viewpoint of further miniaturization of a microfluidic device using the chip 1, the size of a shorter side is preferably 5 mm or less, more preferably 1 mm or less, and still more preferably 500 µm or less.

When the cross-sectional shape of the microchannel is generally circular, its diameter (minor axis in case of ellipse) is preferably 20 µm or more, more preferably 50 µm or more, still more preferably 100 µm or more. From the viewpoint of further miniaturization of the microfluidic device, the diameter (minor axis in case of ellipse) is preferably 5 mm or less, more preferably 1 mm or less, and still more preferably 500 µm or less.

On the other hand, for example, when capillary action is effectively utilized when a liquid flows in the microchannel, when the cross-sectional shape of the microchannel is generally rectangular (including a square), the size of a shorter side is preferably 5 µm or more, more preferably 10 µm or more, and still more preferably 20 µm or more. In addition, the size of a shorter side is preferably 200 µm or less, and more preferably 100 µm or less.

In the present embodiment, a flow path structure such as a flow path 4 illustrated in Fig. 2 is configured in the chip 1.

As illustrated in Fig. 2, the flow path 4 includes a first flow path 5, a second flow path 6, a combined flow path 7, and a mixing flow path 8. The first flow path 5 and the second flow path 6 constitute an upstream flow path 4A. In the present embodiment, the upstream flow path 4A is a branched flow path.

The first flow path 5 and the second flow path 6 are provided to supply a first liquid and a second liquid, respectively. The first liquid and the second liquid may each be a microfluid.

A downstream end of the first flow path 5 and a downstream end of the second flow path 6 are connected to a flow path connecting portion 9. The combined flow path 7 is connected to a downstream side of the flow path connecting portion 9.

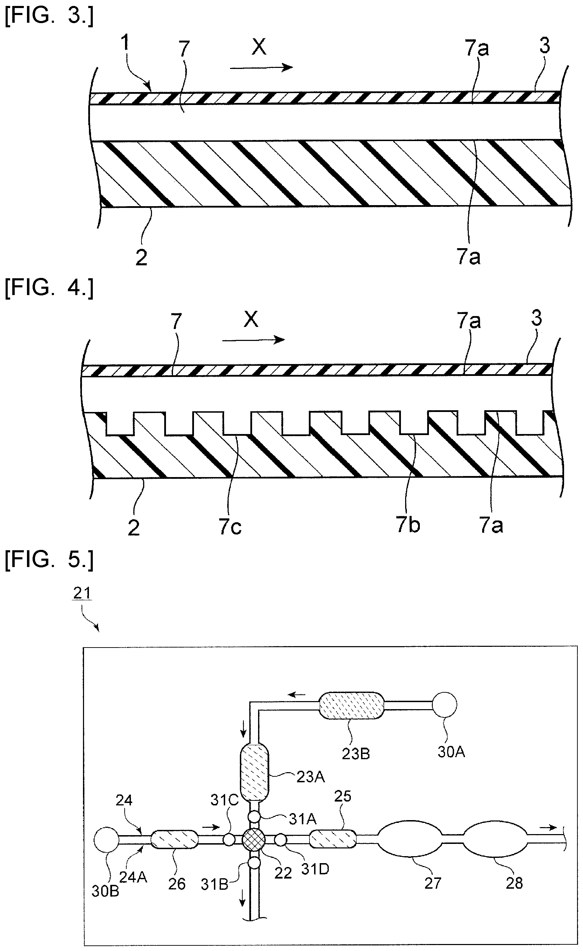

The combined flow path 7 is a flow path for combining the first liquid and the second liquid. In the present embodiment, a wall surface 7a of the combined flow path 7 illustrated in Fig. 3 is made of a material with high affinity to the first liquid. A mixing flow path 8 is connected to a downstream end of the combined flow path 7.

The mixing flow path 8 is a flow path for mixing the first liquid and the second liquid. In the present embodiment, the mixing flow path 8 includes first flow path portions 8a and second flow path portions 8b. Each of the first flow path portions 8a is a recess in which the flow path is enlarged on a first side surface 1a of the chip 1. Each of the second flow path portions 8b is a recess in which the flow path is enlarged on a second side surface 1b of the chip 1. The first flow path portion 8a and the second flow path portion 8b are alternately provided in order from the first flow path portion 8a. As described above, by alternately providing the first flow path portion 8a and the second flow path portion 8b, a plurality of liquids can be mixed more accurately. However, the mixing flow path 8 is not particularly limited as long as it can mix the first liquid and the second liquid combined in the combined flow path 7.

Hereinafter, an example of the liquid supply method using the chip 1 will be described.

First, the first liquid is supplied from the first flow path 5 toward the combined flow path 7. This liquid supply is preferably performed by applying gas from behind the first liquid. A pump (micropump) that generates such gas is connected to the first flow path 5. The micropump may be provided inside the chip 1 as in the present embodiment, or may be provided outside the chip 1.

Examples of other liquid supply means include a gas generating member disposed in a space connected to an upstream side of the first flow path 5. The gas generating member is a member that generates gas by an external force such as light or heat. By applying an external force to the gas generating member at a predetermined timing, gas can be generated, and the gas can be sent into the first flow path 5. As a result, the first liquid can be supplied from the first flow path 5 toward the combined flow path 7. Examples of the gas generating member include a gas generation tape. As the liquid supply means, other appropriate means may be used as long as a liquid can be supplied from the first flow path 5 toward the combined flow path 7.

In the present embodiment, the first liquid is supplied to the combined flow path 7 by being pushed by the gas. The liquid supply method of the present embodiment makes the first liquid wet and spread on the wall surface 7a of the combined flow path 7 illustrated in Fig. 3. As a result, the first liquid is held in the combined flow path 7, and a space through which the gas can pass is formed in the combined flow path 7. In the present embodiment, the wall surface 7a of the combined flow path 7 is made of a material with high affinity to the first liquid, so that the first liquid can wet and spread on the wall surface 7a of the combined flow path 7, and the space through which the gas can pass is formed in the combined flow path 7. In Fig. 3, an X-direction indicates a liquid supply direction, which is a direction along which the combined flow path 7 extends.

Next, the second liquid is supplied from the second flow path 6 to the combined flow path 7. A liquid supply method for the second liquid is also not particularly limited. Preferably, gas is used similarly to the liquid supply method for the first liquid. In this case, cost can be further reduced by using a same liquid supply means for the first liquid and the second liquid.

The first liquid and the second liquid are combined by supplying the second liquid to the combined flow path 7. In the present embodiment, holding in advance the first liquid in the combined flow path 7 can reliably combine the first liquid and the second liquid by supplying the second liquid to the combined flow path 7 without adjusting timing of the liquid supply.

Next, the combined first liquid and second liquid are supplied to the mixing flow path 8 by further supplying the gas from at least one of the first flow path 5 and the second flow path 6. Thereby, the first liquid and the second liquid are mixed. The mixed liquid mixed in the mixing flow path 8 can be discharged and collected from a flow path at a further downstream side.

Conventionally, there is a problem that it is difficult to control the timing of liquid supply in each liquid in order to combine and uniformly mix a plurality of liquids. In addition, variation in size between chips, or the like, possibly causes a timing of combining liquids to be deviated, and a plurality of liquids may pass through in a separated state without being combined with each other. Therefore, there is a problem that a mixing state becomes non-uniform and a mixed state cannot be accurately performed. In this case, measurement results may also vary.

On the other hand, in the liquid supply method of the present embodiment, the first liquid can wet and spread, and be held on the wall surface 7a of the combined flow path 7 in advance, and the space through which the gas can pass is formed in the combined flow path 7. Then, in this state, since the second liquid is supplied to the combined flow path 7, it is possible to reliably combine the first liquid and the second liquid without adjusting the timing of the liquid supply. As a result, in the mixing flow path 8 on the downstream side, the combined first liquid and second liquid can be reliably mixed.

In addition, in the liquid supply method of the present embodiment, the first liquid and the second liquid can be accurately mixed just only by making the first liquid wet and spread on the wall surface 7a of the combined flow path 7, and forming a space through which the gas can pass in the combined flow path 7, so that a complicated liquid supply control mechanism is not required. Therefore, it is possible to miniaturize a device such as a microfluidic device including the chip 1. In addition, the manufacturing cost can be reduced.

In the combined flow path 7, it is preferable that the affinity between the wall surface 7a and the first liquid is high. In this case, even if a length of the combined flow path 7 is shortened, the first liquid can sufficiently wet and spread on the surface of the wall surface 7a, and a space through which the gas can pass can be formed in the combined flow path 7. That is, by increasing the affinity between the wall surface 7a and the first liquid, a required length of the combined flow path 7 can be further shortened, and miniaturization and cost reduction of the chip 1 can be achieved.

For example, a material with high affinity to the first liquid may be selected as a material constituting the wall surface 7a of the combined flow path 7. In addition, by subjecting the wall surface 7a to a surface treatment such as a hydrophilic treatment or a hydrophobic treatment, affinity between the wall surface 7a and the first liquid may be increased, whereby the first liquid can wet and spread on the wall surface 7a of the combined flow path 7, and a space through which the gas can pass may be formed in the combined flow path 7. Examples of such surface treatment include a coating treatment with a surfactant and a surface treatment with plasma.

Alternatively, the wall surface 7a may be roughened, thereby making the first liquid wet and spread on the wall surface 7a of the combined flow path 7 and forming a space through which the gas can pass in the combined flow path 7. In this case, an arithmetic mean height Sa of the wall surface 7a is preferably 100 nm or more, and more preferably 500 nm or more. An upper limit value of the arithmetic mean height Sa is not particularly limited, but can be set to, for example, 1000 nm. The arithmetic mean height Sa can be measured in accordance with ISO 25178.

Alternatively, as illustrated in Fig. 4, a recess 7c may be repeatedly provided in a bottom surface 7b of the combined flow path 7 toward the liquid supply direction of the combined flow path 7 to provide height differences. As a result, the first liquid can wet and spread on the wall surface 7a of the combined flow path 7, and a space through which the gas can pass may be formed in the combined flow path 7. In this case, since the first liquid can be easily retained in the recess 7c, the length of the combined flow path 7 can be set to be shorter. As illustrated in Fig. 4, it is preferable that recesses 7c repeatedly provided on the bottom surface 7b of combined flow path 7 are periodically provided at regular intervals. Also in Fig. 4, the X-direction is the liquid supply direction, which is a direction along which the combined flow path 7 extends.

In this case, a depth (height difference) of the recesses 7c forming the combined flow path 7 is not particularly limited, and is preferably 0.2 mm or more and preferably 1 mm or less. When the depth of the recesses 7c forming the combined flow path 7 is the lower limit value or more, the first liquid can be more easily retained in the recesses 7c. In addition, when the depth of the recesses 7c forming the combined flow path 7 is the upper limit value or less, the second liquid is more hardly retained in the recesses 7c, and the liquid can be more easily supplied to the mixing flow path 8 on the downstream side.

In the present invention, a cross-sectional area of the combined flow path 7 is preferably 0.0004 mm² or more and preferably 25 mm² or less. When the cross-sectional area of the combined flow path 7 is the lower limit value or more, it is easier to form a space through which the gas can pass in the combined flow path 7. When the cross-sectional area of the combined flow path 7 is the upper limit value or less, the first liquid and the second liquid can be more easily combined.

In the present invention, the length of the combined flow path 7 is appropriately selected according to a supply amount of the first liquid, a cross-sectional area of the combined flow path 7, a presence or absence of a surface treatment, and the like, and is preferably 300 mm or less, and more preferably 200 mm or less. When the length of the combined flow path 7 is the above upper limit value or less, it is easy to achieve miniaturization and cost reduction of the chip 1. The lower limit value of the length of the combined flow path 7 is not particularly limited, but is, for example, 1 mm or more.

### (Second embodiment)

Fig. 5 is a schematic plan view for explaining a flow path structure of a chip used in a liquid supply method according to a second embodiment of the present invention. As illustrated in Fig. 5, in a chip 21, an upstream flow path 24A is not branched and is linear. In the upstream flow path 24A, a second liquid holder 26 and a first liquid holder 25 are provided in order from the upstream side. As described above, the upstream flow path 24A may be a linear flow path, or may be a branched flow path as in the first embodiment. Also in the first embodiment, for example, the second liquid holder may be provided in the first flow path 5, and the first liquid holder may be provided in the second flow path 6.

In the chip 21, a specimen holder 22 is provided between the second liquid holder 26 and the first liquid holder 25. A specimen held in the specimen holder 22 can be collected by the second liquid supplied from the second liquid holder 26.

Examples of the specimen held in the specimen holder 22 include body fluids, viruses, bacteria, cells, or extracts thereof. The specimen holder 22 can be used in a form of, for example, a membrane, a filter, a plate, a fibrous form, a tube, a particle, a porous form, or the like. In addition, the specimen holder 22 can be made of, for example, silicon compounds, phosphate minerals, silicate minerals, aluminosilicate minerals, or the like. Among them, the specimen holder 22 is preferably made of silica fiber or glass fiber.

Also in the chip 21, a combined flow path 27 is provided on a downstream side of the upstream flow path 24A. Further, a mixing flow path 28 is provided on a downstream side of the combined flow path 27. In Fig. 5, a combined flow path 27 and a mixing flow path 28 are illustrated in a simplified manner.

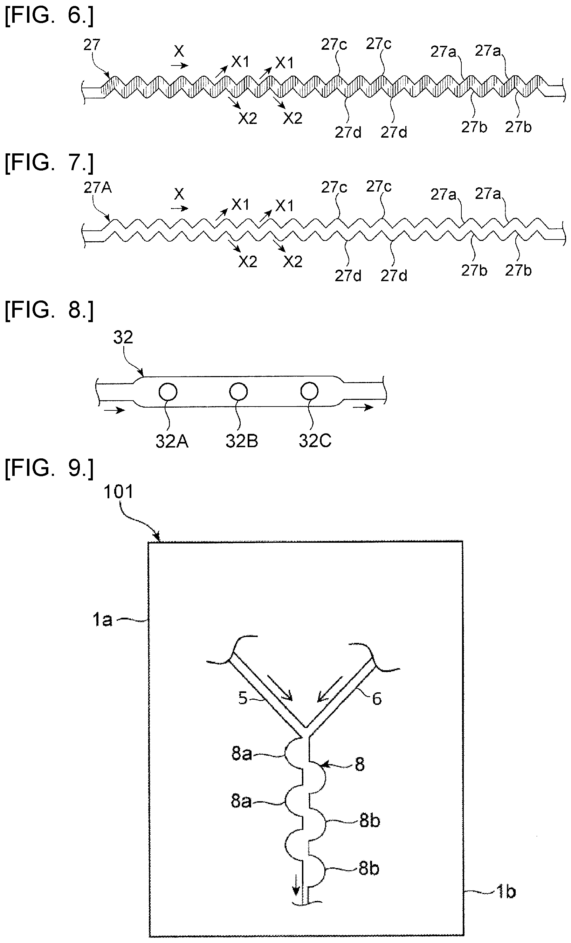

Fig. 6 is an enlarged view of the combined flow path of the chip used in the liquid supply method according to the second embodiment of the present invention.

As illustrated in Fig. 6, the combined flow path 27 of the chip 21 has a zigzag structure in plan view. In addition, in the combined flow path 27, a depth of the flow path is increased in hatched portions.

Specifically, in the combined flow path 27, a first flow path portion 27a in which the depth of the flow path is relatively deep and a second flow path portion 27b in which the depth of the flow path is relatively shallow are repeatedly and alternately provided. The first flow path portion 27a extends in a first direction X1, is refracted by a first bent portion 27c, and is connected to the second flow path portion 27b. The second flow path portion 27b extends in a second direction X2, is refracted by a second bent portion 27d, and is connected to the first flow path portion 27a. The first bent portions 27c and the second bent portions 27d are bent portions that bend the flow path and also change the depth of the flow path. In this manner, there is formed the combined flow path 27 which is repeatedly provided with height differences and has a planar zigzag structure. As a result, in the chip 21, the first liquid can wet and spread on the wall surface of the combined flow path 27, and a space through which the gas can pass may be formed in the combined flow path 27.

In the present embodiment, the first flow path portions 27a are provided so as to each have substantially a same length. The first flow path portions 27a each are provided so as to be substantially parallel to each other. However, the lengths of the first flow path portions 27a may not be substantially the same or may not be substantially parallel.

In addition, the second flow path portions 27b are provided so as to each have substantially a same length. The second flow path portions 27b each are provided so as to be substantially parallel. However, the lengths of the second flow path portions 27b do not have to be substantially the same or substantially parallel.

In the present embodiment, when a traveling direction of the flow path is X, an angle formed by the X and the X1 can be, for example, 0° or more and 90° or less. The angle formed by the X and the X2 can be, for example, 0° or more and 90° or less.

A ratio of the depths of first flow path portion 27a and second flow path portion 27b (first flow path portion 27 a/second flow path portion 27b) is preferably 1 or more, or more preferably 1.5 or more, and preferably 3 or less, or more preferably 2.5 or less. When the depth ratio (first flow path portion 27a/second flow path portion 27b) is within the above range, the first liquid can more reliably wet and spread, and be easily held on the wall surface of the combined flow path 27.

In the present embodiment, when a set of the first flow path portion 27a and the second flow path portion 27b is defined as a repeating unit Y, the number of Y is preferably 5 or more, or more preferably 10 or more, and preferably 30 or less, or more preferably 25 or less. When the number of Y is within the above range, the first liquid can more reliably wet and spread, and be easily held on the wall surface of the combined flow path 27.

In the present invention, unlike the combined flow path 27A of the modification illustrated in Fig. 7, the height difference may not be repeatedly provided, and only the planar zigzag structure may be provided. Also in this case, the first liquid can wet and spread on the wall surface of the combined flow path 27, and a space through which the gas can pass can be formed in the combined flow path 27. Note that, in this case, the same configuration as that of the combined flow path 27 of Fig. 6 can be adopted except that no height difference is repeatedly provided. In addition, from a viewpoint of further uniformly mixing the first liquid and the second liquid, it is preferable that a height differences is repeatedly provided as in the combined flow path 27.

As the combined flow path 27, the combined flow path described in the first embodiment may be used. The mixing flow path 28 described in the first embodiment may also be used, and is not particularly limited.

Also in the chip 21, the same configuration as that of the first embodiment including the substrate 2 and the cover member 3 provided on the substrate 2 can be adopted, and the configuration described in the first embodiment can also be adopted in terms of size and the like of a flow path 24.

Hereinafter, an example of the liquid supply method using the chip 21 will be described.

First, an extraction solution containing a specimen is injected into an extraction solution holder 23A from an injection port (not illustrated). Next, a micropump 30A is driven to supply the extraction solution held in the extraction solution holder 23A to the specimen holder 22. As a result, the specimen is held in the specimen holder 22. Next, a cleaning solution held in the cleaning liquid holder 23B is supplied to the specimen holder 22. Thereby, the specimen held in the specimen holder 22 is cleaned. Note that after the extraction solution and the cleaning solution are delivered to the specimen holder 22, then they are collected by the specimen holder 22 in a waste liquid unit (not illustrated) on its downstream side. In addition, these operations are performed in a state where valve portions 31A and 31B are opened and valve portions 31C and 31D are closed.

Next, the valve portions 31A and 31B are closed, and the valve portions 31C and 31D are opened. Then, a micropump 30B is driven to supply the first liquid held by the first liquid holder 25 to the combined flow path 27. The micropump 30A and the micropump 30B can be used as same as those described in the first embodiment. Among them, the micropump 30A and the micropump 30B are preferably gas generation members such as a gas generation tape. Specifically, it is preferable to supply the liquids by pressure of gas generated by applying light or heat to the gas generating members. In this case, it is possible to further suppress an occurrence of contamination.

In the liquid supply method of the present embodiment, the first liquid wets and spreads on the wall surface of the combined flow path 27. As a result, the first liquid is held in the combined flow path 27, and a space through which the gas can pass is formed in the combined flow path 27.

On the other hand, the second liquid held in the second liquid holder 26 is supplied to the specimen holder 22, and the specimen held in the specimen holder 22 is collected. Next, the collected second liquid is supplied to the combined flow path 27.

The first liquid and the second liquid are combined by supplying the second liquid to the combined flow path 27. Also in the present embodiment, holding in advance the first liquid in the combined flow path 27 can reliably combine the first liquid and the second liquid by supplying the second liquid to the combined flow path 27 without adjusting timing of the liquid supply.

Next, by further supplying gas, the combined first liquid and second liquid are supplied to the mixing flow path 28. Thereby, the first liquid and the second liquid are mixed. The mixed liquid mixed in the mixing flow path 28 can be discharged and collected from the flow path at a further downstream side.

As in the liquid supply method of the second embodiment, after specimen is collected by the second liquid, the specimen may be combined with the first liquid and mixed. In this case, the first liquid preferably contains a reaction solution that reacts with the specimen. When the first liquid contains a reaction solution that reacts with a specimen, the specimen and the reaction solution are uniformly mixed, so that a chemical reaction between the specimen and the reaction solution is uniformly performed in a subsequent step.

For example, when the specimen is a nucleic acid, the first liquid preferably contains a polymerase as a reaction solution that reacts with the specimen. The second liquid preferably contains water. The reaction solution can be appropriately selected according to the specimen.

In the present invention, the first liquid preferably has higher wetness than the second liquid. In this case, the first liquid can more reliably wet and spread, and be easily held on the wall surface of the combined flow path.

In the present invention, a volume of the first liquid held by the first liquid holder is preferably smaller than a volume of the second liquid held by the second liquid holder. In this case, the first liquid can more reliably wet and spread, and be easily held on the wall surface of the combined flow path, and the second liquid can be more reliably combined with the first liquid. Note that the volume of the first liquid held by the first liquid holder corresponds to a supply amount of the first liquid. In addition, the volume of the second liquid held by the second liquid holder corresponds to a supply amount of the second liquid.

In the present invention, when the supply amount of the first liquid is V1 and the supply amount of the second liquid is V2, a ratio (V1/V2) is preferably 0.5 or less, and more preferably 0.35 or less. In this case, the first liquid can more reliably wet and spread, and be held by the wall surface 7a of the combined flow path 7, and the second liquid can be more reliably combined with the first liquid. The lower limit value of the ratio (V1/V2) is not particularly limited, but can be set to, for example, 0.05.

The supply amount of the first liquid is preferably 20 µL or less, and more preferably 10 µL or less. In this case, the first liquid can more reliably wet and spread, and be held by the wall surface 7a of the combined flow path 7. The lower limit value of the supply amount of the first liquid is not particularly limited, but can be, for example, 1 µL.

The supply amount of the second liquid is preferably 20 µL or more, and more preferably 30 µL or more. In this case, the second liquid can be more reliably combined with the first liquid. The upper limit value of the supply amount of the second liquid is not particularly limited, but can be, for example, 200 µL.

In the description of the liquid supply method of each embodiment, the combining and mixing methods of the first liquid and the second liquid have been described, and the liquid supply method of the present invention may be used for combining and mixing three or more liquids. In this case, three or more flow paths may be connected to the flow path connecting portion. In this case, one kind of liquid may be held in the combined flow path, or two or more kinds of liquids may be held in the combined flow path. In this state, the remaining liquid may be combined. Even in this case, a plurality of liquids can be accurately mixed without a complicated liquid supply control mechanism.

Hereinafter, the present invention will be clarified by giving specific Examples and Comparative Examples of the present invention. Note that the present invention is not limited to the following Examples.

### (Example 1)

In Example 1, a chip 1 having a flow path structure illustrated in Fig. 2 was manufactured. The chip 1 was prepared by bonding a cover member 3 to a substrate 2 which is an injection molding body made of a cycloolefin polymer. A combined flow path had a width of 1 mm, a depth of 1 mm, and a length of 60 mm. The combined flow path was a combined flow path 27A having a planar zigzag structure illustrated in Fig. 7. In addition, in the direction X2 along which a second flow path portion 27b extends, a distance between flow path centers in adjacent first flow path portions 27a was set to 1.5 mm. In the direction X1 along which a first flow path portion 27a extends, a distance between flow path centers in adjacent second flow path portions 27b was set to 1.5 mm.

Using such a chip 1, 7 µL of water in which fluorescent particles (particle size: 1 µm, emission wavelength: 485.56 nm) as a first liquid were dispersed was supplied to a combined flow path 7 using gas, and held in a combined flow path 7. A position where the first liquid was held was a position 40 mm from an upstream end of the combined flow path 7. Next, 21 µL of water as a second liquid was supplied to the combined flow path 7 using the gas, and combined with the first liquid in the combined flow path 7. Then, the combined first liquid and second liquid were supplied to a mixing flow path 8 by the gas, and the first liquid and the second liquid were mixed.

Next, a mixed state of the first liquid and the second liquid was measured by the following method. Further, mixing uniformity was evaluated according to the following evaluation criteria.

A mixed solution after combining and mixing the above liquids was supplied to a measurement flow path (flow path width 1 mm, flow path depth 1 mm, flow path length 100 mm) on the downstream side of the combined flow path 7, and a vicinity of an upstream, a vicinity of a midstream, and a vicinity of a downstream of the supplied mixed solution were observed with a fluorescence microscope to measure the number of fluorescent particles per unit area.

### < Evaluation criteria >

Good... Variation in the number of fluorescent particles in the upstream, midstream, and downstream is within ± 20%

Poor... Variation in the number of fluorescent particles in the upstream, midstream, and downstream is ± 50% or more

### (Example 2)

In Example 2, a combined flow path 27 of Fig. 6 in which a height difference is repeatedly provided and which has a planar zigzag structure was formed. In addition, a chip 1 was manufactured in a same manner as in Example 1 except that a flow path depth of a first flow path portion 27a was 1.3 mm and a flow path depth of a second flow path portion 27b was 0.7 mm, and a mixed state and mixing uniformity were evaluated. The position where the first liquid was held was a position 20 mm from an upstream end of a combined flow path 7.

### (Example 3)

In Example 3, a chip 1 was prepared in the same manner as in Example 1 except that a surfactant (sodium dodecyl sulfate (SDS), manufactured by FUJIFILM Wako Pure Chemical Corporation) dissolved in water at a ratio of 2.0 wt% was applied to an inner wall surface (wall surface 7a) of a combined flow path 7 illustrated in Fig. 2 by 5 µL, and the mixed state and mixing uniformity were evaluated. The position where the first liquid was held was a position 50 mm from the upstream end of the combined flow path 7.

### (Example 4)

In Example 4, a chip 1 was manufactured in the same manner as in Example 1 except that an inner wall surface (wall surface 7a) of a combined flow path 7 illustrated in Fig. 2 was made rough by sandblasting an injection molding die, and the mixed state and the mixing uniformity were evaluated. The position where the first liquid was held was a position 30 mm from the upstream end of the combined flow path 7.

### (Comparative Example 1)

In Comparative Example 1, a chip 101 having a flow path structure illustrated in Fig. 9 was manufactured. The chip 101 was prepared by bonding a cover member 3 to a substrate 2 which is an injection molding body made of a cycloolefin polymer. The chip 101 of Comparative Example 1 is directly connected to a mixing flow path from a flow path connecting portion (combined point), and does not have a combined flow path.

Using such a chip 101, 7 µL of water in which fluorescent particles (particle size: 1 µm, emission wavelength: 485.56 nm) as a first liquid were dispersed and 21 µL of water as a second liquid were respectively supplied from a first flow path 5 and a second flow path 6 at a same timing using gas, and supplied to a mixing flow path 8 via a flow path connecting portion, and the first liquid and the second liquid were mixed. Next, the mixed state and mixing uniformity were evaluated in the same manner as in Example 1.

The results are illustrated in Table 1 below. The arithmetic mean heights (Sa) illustrated in Table 1 were obtained by observing the inner wall surfaces of the combined flow paths with a laser microscope (manufactured by Olympus Corporation, model number "LEXT OLS 4000") and measuring a range of 2 mm square, respectively.

**[Table 1]**

| | Example 1 | Example 2 | Example 3 | Example 4 | Comparative Example 1 |
|---|---|---|---|---|---|
| | Combined flow path is flat | Relief structure | Coating with surfactant | Rough surface | No combined flow path |
| Combined flow path width (mm) | 1.0 | 1.0 | 1.0 | 1.0 | No combined flow path |
| Combined flow path depth (mm) | 1.0 | 0.7/1.3 | 1.0 | 1.0 | |
| Combined flow path length (mm) | 60 | 60 | 60 | 60 | |
| Arithmetic mean heights (Sa) (nm) | 200 | 200 | 200 | 800 | |
| First liquid (µL) | 7 | 7 | 7 | 7 | 7 |
| Second liquid (µL) | 21 | 21 | 21 | 21 | 21 |
| The number of fluorescent particles in the upstream | 124 | 118 | 119 | 120 | 40 |
| The number of fluorescent particles in the midstream | 104 | 114 | 112 | 111 | 145 |
| The number of fluorescent particles in the downstream | 115 | 123 | 120 | 118 | 101 |
| Combined uniformity | Good ±10% | Good ±4% | Good ±8% | Good ±8% | Poor ±59% |
| The position where the first liquid was held (mm) | 40 | 20 | 50 | 30 | - |

From Table 1, it was confirmed that in Examples 1 to 4, as compared with Comparative Example 1, variations in the number of fluorescent particles were small and mixings were performed more accurately.

### (Example 5)

In Example 5, a chip 21 having a flow path structure illustrated in Fig. 5 was manufactured. The chip 21 was prepared by bonding a cover member 3 to a substrate 2 which is an injection molding body made of a cycloolefin polymer. As a combined flow path, a combined flow path 27 having a structure illustrated in Fig. 7 was formed. The combined flow path 27 had a width of 1 mm and a length of 36 mm. Each of first flow path portions 27a had a flow path depth of 1.3 mm, and each of second flow path portions 27b had a flow path depth of 0.7 mm. In the direction X2 along which the second flow path portion 27b extends, a distance between flow path centers in the adjacent first flow path portions 27a was set to 1.5 mm. In the direction X1 along which the first flow path portion 27a extends, a distance between flow path centers of the adjacent second flow path portions 27b was set to 1.5 mm.

Further, a mixed liquid collecting unit 32 illustrated in Fig. 8 was provided downstream side of the mixing flow path 28. The mixed liquid collecting unit 32 was provided with an upstream cell 32A, a midstream cell 32B, and a downstream cell 32C in this order from an upstream side. The chip 21 was evaluated as follows.

First, as a specimen, DNA purified from Escherichia coli, NBRC 12713 strain (obtained from National Institute of Technology and Evaluation) was prepared. Purification was performed by MonoFas bacterial genomic DNA extraction kit (manufactured by GL Sciences Inc.).

Next, 1 µL of the purified DNA of E. coli NBRC 12713 strain (10,000 copies/µL) and 1 µL of carrier RNA (polyA, 3 µg/µL) manufactured by QIAGEN were added to 148 µL of an aqueous solution (pH 7.0) containing four molars of urea, four molars of guanidine hydrochloride, and two molars of calcium chloride to prepare 150 µL of an extraction solution containing the nucleic acid.

Next, 150 µL of the extraction solution containing the nucleic acid was supplied from an extraction solution holder 23A to a specimen holder 22 to make the silica fiber filter of the specimen holder 22 adsorb the nucleic acid. Next, 400 µL of a cleaning solution (aqueous solution of melamine 50 mM, pH 4.0) was supplied to the specimen holder 22 to wash the nucleic acid.

Next, from a first liquid holder 25, 5 µL of a first liquid (preparation of 1 µL of "MightyAmp DNA Polymerase (Takara Bio Inc.)" and 4 µL of water) was supplied to the combined flow path 27 using gas, and was held by wetting and spreading on a wall surface of the combined flow path 27. On the other hand, 45 µL of a second liquid (preparation of 25 µL of MightyAmp buffer (manufactured by Takara Bio Inc.) and 20 µL of water) was supplied from a second liquid holder 26 to the specimen holder 22 using the gas, and the nucleic acid was collected. Furthermore, the second liquid was supplied to the combined flow path 27 using the gas, to be combined with the first liquid in the combined flow path 27. Then, the combined first liquid and second liquid were supplied to the mixing flow path 28 by the gas, and the first liquid and the second liquid were mixed. The mixed solution was collected from each of the upstream cell 32A, the midstream cell 32B, and the downstream cell 32C of the mixing and collecting unit 32.

Next, 5 µL of the collected liquid with which the nucleic acid was collected in each cell was mixed with a PCR reagent to prepare a PCR reaction solution. As the PCR reagent, a mixture of Primer-F (manufactured by Hokkaido Biosystem Co., Ltd.) 50 pmol/µL: 1 µL, Primer-R (manufactured by Hokkaido Biosystem Co., Ltd.) 50 pmol/µL: 1 µL, and SYBR Green (Lonza): 1 µL, which was injected into a tube, and dried, was used.

Next, the obtained PCR reaction solution prepared from the collected liquid was amplified using a thermal cycler "Light cycler 96 (Roche Ltd.)". The amplification was performed by heating the PCR reaction solution at 98°C for 120 seconds, followed by performing 40 times of cycles of 98°C for 15 seconds and 67°C for 15 seconds. From a relationship between the number of PCR cycles and fluorescence intensity, a Ct value (a point at which a second derivative of an amplification curve was obtained and the second derivative was maximized) was determined.

In this way, Ct values of the collected liquid obtained from each of the upstream cell 32A, the midstream cell 32B, and the downstream cell 32C were measured, and uniformity was evaluated from the variation (standard deviation SD) of the Ct values.

### (Example 6)

In Example 6, Ct values of collected liquids respectively obtained from the upstream cell 32A, the midstream cell 32B, and the downstream cell 32C were measured in a same manner as in Example 5 except that the combined flow path 27 illustrated in Fig. 6 was changed to the combined flow path 27A illustrated in Fig. 7 in which no height difference had been repeatedly provided, and uniformity was evaluated from variations in the Ct values (standard deviation SD).

### (Comparative Example 2)

In Comparative Example 2, Ct values of collected liquids respectively obtained from the upstream cell 32A, the midstream cell 32B, and the downstream cell 32C were measured in the same manner as in Example 5 except that the combined flow path 27 illustrated in Fig. 6 was not provided, and uniformity was evaluated from variations in the Ct values (standard deviation SD).

The results are illustrated in Table 2 below.

**[Table 2]**

| | | Example 5 | Example 6 | Comparative Example 2 |
|---|---|---|---|---|
| Combined flow path | | With relief | No relief | - |
| Ct value | Front | 30.1 | 29.2 | 28.5 |
| | Middle | 30.3 | 30.1 | 33.0 |
| | Rearward | 30.0 | 30.5 | 37.1 |
| | SD | 0.15 | 0.67 | 4.30 |

From Table 2, it was confirmed that in Examples 5 to 6, the variations in the Ct values were small, and mixing was performed more accurately as compared with that of Comparative Example 2.

### EXPLANATION OF SYMBOLS

1, 21: Chip
1a: First side surface
1b: Second side surface
2: Substrate
3: Cover member
4, 24: Flow path
4A, 24A: Upstream flow path
5: First flow path
6: Second flow path
7, 27, 27A: Combined flow path
7a: Wall surface
7b: Bottom surface
7c: Recess
8, 28: Mixing flow path
8a: First flow path portion
8b: Second flow path portion
9: Flow path connecting portion
22: Specimen holder
23A: Extraction solution holder
23B: Cleaning liquid holder
25: First liquid holder
26: Second liquid holder
27a: First flow path portion
27b: Second flow path portion
27c: First bent portion
27d: Second bent portion
30A, 30B: Micropump
31A to 31D: Valve part
32: Mixed liquid collecting unit
32A: Upstream cell
32B: Midstream cell
32C: Downstream cell

## Claims

1. A liquid supply method using an inspection chip, the inspection chip comprising:
a combined flow path that combines a first liquid and a second liquid; and a mixing flow path that mixes the combined first liquid and the second liquid on a downstream side of the combined flow path, the liquid supply method comprising:
a step of supplying the first liquid to the combined flow path, and making the first liquid wet and spread on a wall surface of the combined flow path to hold the first liquid in the combined flow path; a step of supplying the second liquid to the combined flow path and combining the first liquid and the second liquid; and a step of supplying the combined first liquid and the second liquid to the mixing flow path, and mixing the first liquid and the second liquid.

2. The liquid supply method according to claim 1, wherein after a specimen is collected using the second liquid, the first liquid and the second liquid are combined.

3. The liquid supply method according to claim 1 or 2, wherein the specimen is a body fluid, a virus, a bacterium, a cell, or an extract thereof.

4. The liquid supply method according to any one of claims 1 to 3, wherein a volume of the first liquid is smaller than a volume of the second liquid.

5. The liquid supply method according to any one of claims 1 to 4, wherein the first liquid has higher wetness than the second liquid.

6. The liquid supply method according to any one of claims 1 to 5, wherein a height difference is repeatedly provided at a bottom portion of the combined flow path in a liquid supply direction of the combined flow path.

7. The liquid supply method according to any one of claims 1 to 6, wherein a wall surface of the combined flow path is surface-treated.

8. The liquid supply method according to any one of claims 1 to 7, wherein a wall surface of the combined flow path is a rough surface.

9. The liquid supply method according to any one of claims 1 to 8, wherein the first liquid and the second liquid are supplied by pressure of gas generated by applying light or heat to a gas generation member.

10. An inspection chip comprising:
an upstream flow path in which a first liquid and a second liquid are each independently held;
a combined flow path that combines the first liquid and the second liquid on a downstream side of the upstream flow path; and
a mixing flow path that mixes the first liquid and the second liquid combined on a downstream side of the combined flow path,
a bottom portion of the combined flow path, being repeatedly provided with height differences in a liquid supply direction of the combined flow path.

11. An inspection chip comprising:
an upstream flow path in which a first liquid and a second liquid are each independently held;
a combined flow path that combines the first liquid and the second liquid on a downstream side of the upstream flow path; and
a mixing flow path that mixes the first liquid and the second liquid combined on a downstream side of the combined flow path,
a wall surface of the combined flow path being surface-treated.

12. An inspection chip comprising:
an upstream flow path in which a first liquid and a second liquid are each independently held;
a combined flow path that combines the first liquid and the second liquid on a downstream side of the upstream flow path; and
a mixing flow path that mixes the first liquid and the second liquid combined on a downstream side of the combined flow path,
a wall surface of the combined flow path being a rough surface.

13. The inspection chip according to any one of claims 10 to 12, wherein the upstream flow path further includes a specimen holder for holding a specimen on a downstream side of the second liquid.
